Europäisches Patentamt

(19) European Patent Office

Office européen des brevets

(11) Veröffentlichungsnummer: **0 085 788**
**B1**

(12) **EUROPÄISCHE PATENTSCHRIFT**

(45) Veröffentlichungstag der Patentschrift:
**20.04.88**

(21) Anmeldenummer: **82112022.7**

(22) Anmeldetag: **27.12.82**

(51) Int. Cl.⁴: **H 04 N 11/18,** H 04 N 9/84

(54) **Schaltungsanordnung zur Dekodierung von SECAM-Farbfernsehsignalen.**

(30) Priorität: **30.01.82 DE 3203040**

(43) Veröffentlichungstag der Anmeldung:
**17.08.83 Patentblatt 83/33**

(45) Bekanntmachung des Hinweises auf die Patenterteilung:
**20.04.88 Patentblatt 88/16**

(84) Benannte Vertragsstaaten:
**BE CH FR IT LI LU NL**

(56) Entgegenhaltungen:
**DE - B - 2 911 190**
**FR - A - 2 409 650**
**GB - A - 1 368 997**

(73) Patentinhaber: **Deutsche Thomson-Brandt GmbH,**
**Hermann-Schwer-Strasse 3 Postfach 2060,**
**D-7730 Villingen-Schwenningen (DE)**

(72) Erfinder: **Cerda, Davo Silvestre, Waldstrasse 35,**
**D-7730 Villingen-Schwenningen (DE)**
Erfinder: **Duret, Bernard, la Gaignardiere,**
**F-49320 Saint-Saturins/Loire (FR)**

## Beschreibung

### Stand der Technik

Die Erfindung geht aus von einer Schaltungsanordnung zur Dekodierung von Farbfernsehsignalen nach dem SECAM-System, bei dem die beiden Farbsignale für Rot und Blau von Zeile zu Zeile abwechselnd auf je einem Hilfsträger in Frequenzmodulation übertragen werden und die einzelnen Farbsignale zur Vermeidung von Störungen der Farbsignale durch das Leuchtdichtesignal nach einem bestimmten Schema senderseitig in der Phase umgeschaltet werden, bei welcher eine Logikschaltung vorgesehen ist, die mit Hilfe einer Schaltstufe die vom Sender vorgenommenen Phasenumschaltungen rückgängig macht.

Bekanntlich werden beim SECAM-Farbfernsehverfahren die Farbsignale sequentiell von Zeile zu Zeile abwechselnd Blau und Rot in Frequenzmodulation auf je einem Hilfsträger übertragen. Bei der Codierung des Farbfernsehsignals werden die beiden Signale für Rot und Blau von Zeile zu Zeile in der Phase nach folgendem Schema umgeschaltet:

| Voll-Bild | 1 | | 2 | | 3 | | 4 | | 5 | | 6 | | 7 | |
|---|---|---|---|---|---|---|---|---|---|---|---|---|---|---|
| Teil-Bild | 1 | 2 | 3 | 4 | 5 | 6 | 7 | 8 | 9 | 10 | 11 | 12 | 13 | 14 |
| Zeile | | | | | | | | | | | | | | |
| 1 | 0 | | 0 | | $\pi$ | | 0 | | 0 | | $\pi$ | | 0 | |
| 313 | | 0 | | 0 | | $\pi$ | | 0 | | 0 | | $\pi$ | | 0 |
| 2 | 0 | | $\pi$ | | 0 | | 0 | | $\pi$ | | 0 | | 0 | |
| 314 | | $\pi$ | | 0 | | $\pi$ | | $\pi$ | | 0 | | $\pi$ | | $\pi$ |
| 3 | $\pi$ | | 0 | | 0 | | $\pi$ | | 0 | | 0 | | $\pi$ | |
| 315 | | 0 | | $\pi$ | | $\pi$ | | 0 | | $\pi$ | | $\pi$ | | 0 |
| 4 | 0 | | 0 | | n | | 0 | | 0 | | n | | 0 | |
| 316 | | $\pi$ | | $\pi$ | | 0 | | $\pi$ | | $\pi$ | | 0 | | $\pi$ |
| 5 | 0 | | n | | 0 | | 0 | | n | | 0 | | 0 | |
| 317 | | $\pi$ | | 0 | | $\pi$ | | $\pi$ | | 0 | | $\pi$ | | $\pi$ |
| 308 | 0 | | $\pi$ | | 0 | | 0 | | $\pi$ | | 0 | | 0 | |
| 620 | | $\pi$ | | 0 | | $\pi$ | | $\pi$ | | 0 | | $\pi$ | | $\pi$ |
| 309 | $\pi$ | | 0 | | 0 | | $\pi$ | | 0 | | 0 | | $\pi$ | |
| 621 | | 0 | | n | | n | | 0 | | n | | n | | 0 |
| 310 | 0 | | 0 | | $\pi$ | | 0 | | 0 | | $\pi$ | | 0 | |
| 622 | | $\pi$ | | $\pi$ | | 0 | | $\pi$ | | $\pi$ | | 0 | | $\pi$ |
| 311 | 0 | | n | | 0 | | 0 | | n | | 0 | | 0 | |
| 623 | | $\pi$ | | 0 | | $\pi$ | | $\pi$ | | 0 | | $\pi$ | | $\pi$ |
| 312 | $\pi$ | | 0 | | 0 | | $\pi$ | | 0 | | 0 | | $\pi$ | |
| 624 | | 0 | | n | | n | | 0 | | n | | n | | 0 |
| 313 | 0 | | 0 | | $\pi$ | | 0 | | 0 | | $\pi$ | | 0 | |
| 625 | | $\pi$ | | $\pi$ | | 0 | | $\pi$ | | $\pi$ | | 0 | | $\pi$ |

Man erkennt, dass nach jeweils sechs Teilbildern die gleichen Phasenbeziehungen vorliegen. Diese Umschaltung vermindert ein Störmuster auf dem Farbfernsehbildschirm, welches durch die gegenseitige Beeinflussung vom Luminanz- und Chrominanzsignal entsteht. Diese Umschaltung bewirkt bei der Verarbeitung im SECAM-Dekoder jedoch einen anderen Störeffekt in Form von auf dem Bildschirm erkennbaren horizontalen Streifen. Solange Luminanz- und Chrominanzsignal im Empfänger gemeinsam verarbeitet werden, muss die vom Sender vorgegebene Phasenbeziehung erhalten bleiben. Der Dekoder benötigt jedoch nur eine gleiche Phasenlage der beiden Farbsignale F.

Wie aus der vorangehenden Tabelle hervorgeht, handelt es sich um Phasenbeziehungen der Farbsignale von Zeile zu Zeile in folgenden Kombinationen:

00, 0π, π0 während der ungeradzahligen Teilbilder und ππ, 0π, π0 während der geradzahligen Teilbilder, so dass sämtliche Kombinationen von Phasenumschaltungen von Zeile zu Zeile vorkommen können.

Hinter der Verzögerungsleitung im SECAM-Dekoder sind die aufeinanderfolgenden Frequenzen für das Blausignal und das Rotsignal gleichzeitig vorhanden und deshalb muss dafür gesorgt werden, dass das Übersprechen zwischen den beiden Signalen reduziert wird.

Das Ergebnis ist ein störendes Differenzsignal von 156,250 KHZ gebildet aus den beiden Trägerfrequenzen 4406,250 KHZ für Rot und 4250,000 KHZ für Blau. Das Übersprechen wird durch die Verkopplung des Eingangssignals mit dem Ausgangsignal der Verzögerungsleitung hervorgerufen durch die zweifache Reflektion von Eingangs- und Ausgangsignal in der Verzögerungsleitung, wodurch die Signale diese 3 mal durchlaufen (3T), durch die Umschaltung sowie durch die Verkopplung der beiden Diskriminatoren zur Demodulation der beiden Farbsignale.

Es ist eine Schaltungsanordnung bekannt (DE-AS 2 911 190), die dazu dient, die Phase der empfangenden Farbsignale derart umzuschalten, dass die durch das Sendesystem bedingte unterschiedliche Phasenlage während einer Zeile gegenüber den Phasenlagen der beiden anderen Zeilen derart umgeschaltet wird, dass sämtliche Zeilen die gleiche Phasenlage besitzten. Diese Phasengleichheit bezieht sich jedoch nur auf die Zeilen eines Halbbildes. Während der Dauer des nächst folgenden Halbbildes wird wieder die Phasenlage einer Zeile gegenüber denjenigen der beiden anderen Zeilen umgeschaltet, so dass wieder sämtliche Zeilen dieses Halbbildes die gleiche Phasenlage besitzen. Diese ist jedoch gegenüber dem vorhergehenden Halbbild entgegengesetzt. Von Halbbild zu Halbbild ändert sich also die Phase der Zeilen. Besitzen z.B. die Zeilen der ungradzahligen Halbbilder die Phase 0, erhalten die Zeilen der gradzahligen Halbbilder die Phase $\pi$. Hieraus ergibt sich, dass mit Hilfe der bekannten Schaltungsanordnung die Phasen der Signale nur während der Dauer eines Halbbildes konstant und gleich bleiben, während sie beim darauffolgenden Halbbild zwar auch konstant und gleich, jedoch gegenphasig zu den Zeilen des vorhergehenden Halbbildes sind. Sei der bekannten Schaltungsanordnung handelt es sich insbesondere um die Gleichpolung von Farbsignalen, die in zwischraumlosen Schrägspuren auf ein Magnetband aufgezeichnet werden sollen. Bei der Aufzeichnung von Videosignalen, bei der die Aufzeichnungsspuren sehr dicht, oft unmittelbar ohne Zwischenraum (Rasen) nebeneinander liegen, ist es wegen der Übersprechdämpfung erforderlich, dass die Signale von Spur zu Spur, d.h. von Halbbild zu Halbbild entgegengesetzte Phasen besitzen.

Aufgabe
Der Erfindung liegt die Aufgabe zugrunde, bei einer Schaltungsanordnung der eingangs beschriebenen Art auch die Phase der Signale von Halbbild zu Halbbild derart umzuschalten, dass die durch den Sender vorgenommene Umschaltung der einzelnen Farbsignale für sämtliche Zeilen in sämtlichen Halbbildern rückgängig und gleich gemacht werden. Diese Aufgabe wird durch die in den Patentansprüchen angegebenen Massnahmen gelöst.

Die Erfindung geht von der Erkenntnis aus, dass man die von dem Sender vorgenommenen Phasenumschaltung rückgängig machen muss, so dass die Chrominanzsignale immer die gleiche Phasenlage haben (0,0), so dass die störende Differenzfrequenz von 156,250 KHZ von Zeile zu Zeile immer die gleiche Phasenlage hat (10 fache Zeilenfrequenz) was weniger störend wirkt, da diese feste Phasenbeziehung der (B–Y) – und (R–Y) – Signale auf dem Bildschirm in Zeilenrichtung nur noch Sättigungsfehler hervorrufen. Von Zeile zu Zeile ändert sich jedoch nichts, wodurch die lästigen horizontalen Streifen auf dem Bildschirm vermieden werden.

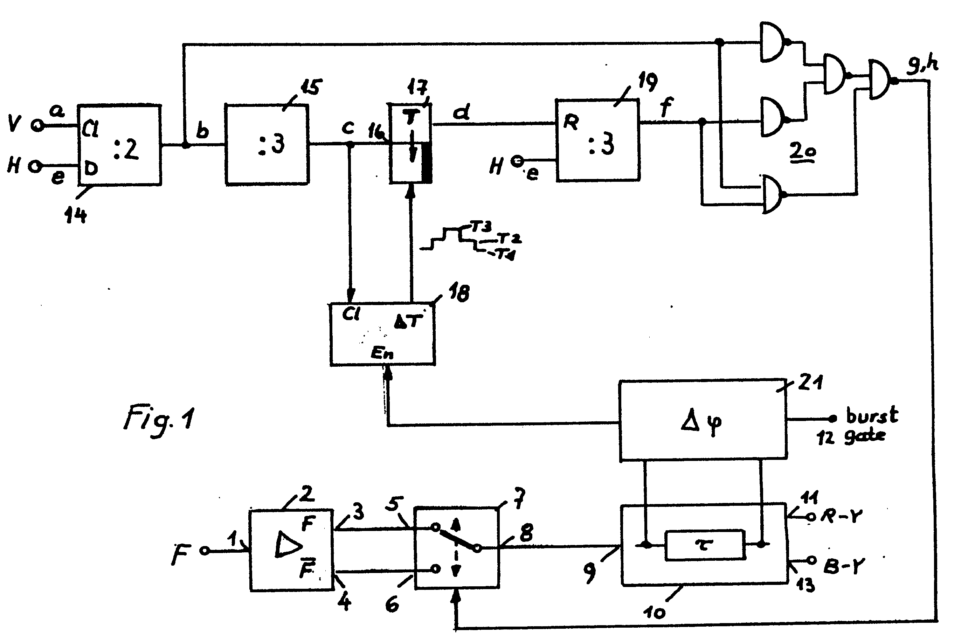

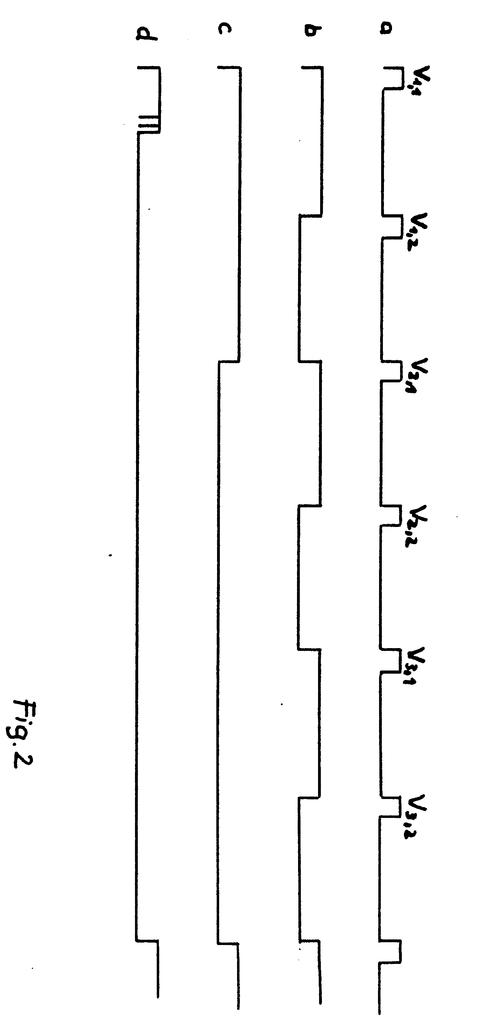

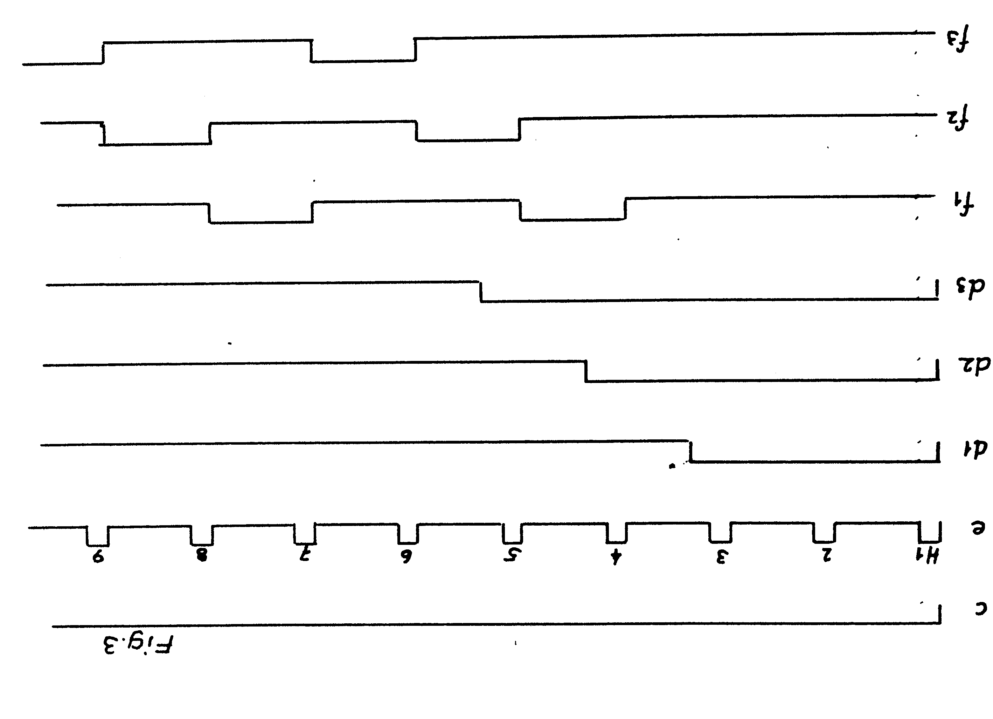

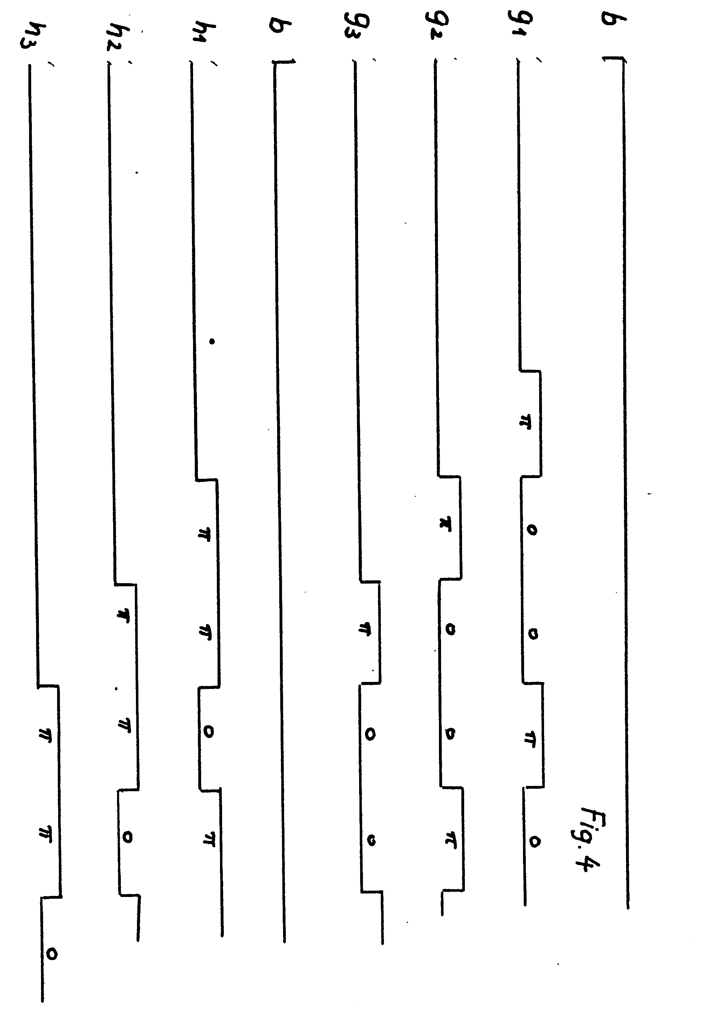

Beschreibung
Nachstehend soll an einem Ausführungsbeispiel das Wesentliche der Erfindung beschrieben werden. Die Wirkungsweise sei mit Hilfe der Zeichnung erläutert, wobei
Figur 1 ein Blockschaltbild darstellt und in
Figur 2 – Figur 4 die an den gekennzeichneten Punkten der Figur 1 anliegenden Signale wiedergegeben sind. An den Eingang 1 einer Verstärkerstufe 2 wird das empfangene Farbsignal F geschaltet. Die Stufe 2 besitzt zwei Ausgänge 3 und 4, an denen gleiche aber jeweils Gegenphasesignale F und $\overline{F}$ liegen, die den Eingängen 5, 6 einer Schaltstufe 7 zugeführt werden. Der Ausgang 8 der Schaltstufe 7 ist an den Eingang 9 des SECAM-Dekoders 10 gelegt, an dessen Ausgängen 11, 12 die dekodierten Farbsignale (R–Y), (B–Y) abgenommen werden. Erfindungsgemäss wird der Ausgang 8 der Schaltstufe 7 jeweils an denjenigen Ausgang 3 oder 4 der Stufe 2 geschaltet, an dem z.B. die 0-Phase des Farbsignals F liegt. Dabei wird die Schaltstufe 7 von einer Schaltlogik 14–20 in die erforderliche Schaltstellung gebracht. Dies soll nachstehend mit Hilfe der in den Figuren 2, 3 und 4 aufgezeichneten Signalverläufe an den gekennzeichneten Punkten a–h in der Schaltung nach Figur 1 erläutert werden.

An den Clock-Eingang CI eines D-Flip-Flops 14 werden die bildfrequenten Impulse V gelegt (Figur 2a). Am D-Eingang liegen zeilenfrequent Impulse H (Figur 3e). Die Vertikalfrequenz wird durch das Flip-Flop 14 durch 2 geteilt (Figur 2b). Eine nachfolgende Stufe 15 teilt diese Frequenz durch 3 (Figur 2c). Dieses Signal c ist an den Eingang 16 einer monostabilen Kippstufe 17 geschaltet, deren Zeitkonstante T über eine Spannung eines Auf-Ab-Zählers 18 beeinflussbar ist. Die Ausgangsspannung nach Figur 2d wird auf den Reset-Eingang eines Teilers 19 geschaltet, welchem zeilenfrequente Impulse (Figur 3e) zugeleitet werden. Die Stufe 19 wirkt als Teiler mit dem Faktor 1:3. In Figur 3 sind drei verschieden lange Zeitkonstanten dargestellt. Figur 3d1, d2, d3. Je nach eingestellter Zeitkonstante T ergibt sich am Ausgang f der Stufe 19 ein Signalverlauf nach Figur 3f1, f2 und f3. Mit Hilfe der Gatterschaltung 20 entsteht am Ausgang dieser Gatter ein Signalverlauf gemäss Figur 4g1, g2, g3 bei den ungeradzahligen Teilbildern V1,1, V2,1, V3,1, wenn am Punkt b H-Potential liegt, bzw. ein Signalverlauf h1, h2 bzw. h3 bei den geradzahligen Teilbildern V1,2, V2,2, V3,2, wenn am Punkt b O-Potential liegt. Diese Spannungen nach Figur 4g bzw. 4h dienen als Schaltspannung für die Schaltstufe 7, die den Umschalter jeweils in diejenige Stellung schaltet, dass an ihrem Ausgang immer die gleiche Phase erscheint. Dazu wird im SECAM-Dekoder das Farbsignal am Eingang und Ausgang der Verzögerungsleitung in einer Phasenvergleichsstufe 21 verglichen. Solange die durch das Burstgate 12 aufgetastete Phasenvergleichschaltung 21 einen Phasenunterschied feststellt, gelangt z.B. H-Potential an den Enable-Eingang En der Stufe 18, die mit Hilfe des c-Signals solange schrittweise eine Spannung verändert, bis die monostabile Kippschaltung 17 die geeignete Zeitkonstante T besitzt, so dass der Schalter 7 die Signalspannung derart umschaltet, dass immer am Eingang und Ausgang der Verzögerungsleitung die gleiche

Phase liegt. Auf diese Weise wird der Umschalter 7 in die erforderliche Schaltfolge 0, 0π bzw. π,π,0 gebracht (Figur 4g, Figur 4h).

**Patentansprüche**

1. Schaltungsanordnung zur Dekodierung von Farbfernsehsignalen nach dem SECAM-System, bei dem die beiden Farbsignale für Rot und Blau von Zeile zu Zeile abwechselnd auf je einem Hilfsträger in Frequenzmodulation übertragen werden und die einzelnen Farbsignale zur Vermeidung von Störungen der Farbsignale durch das Leuchtdichtesignal nach einem bestimmten Schema senderseitig in ihren Phasenlagen umgeschaltet werden, bei welcher eine Logikschaltung (14–20) vorgesehen ist, welche mit Hilfe einer Schaltstufe (7) die vom SECAM-Sender vorgenommenen Phasenumschaltungen rückgängig macht, dadurch gekennzeichnet, dass die Logikschaltung (14–20) für die Schaltstufe (7) in Abhängigkeit von den ineinander verschachtelten Teilbildern Umschaltsignale (g, h, Figur 4) erzeugt, die den Ausgang (8) der Schaltstufe (7) jeweils an denjenigen Ausgang einer Verstärkerstufe (2) für das Farbsignal mit zwei gegenphasigen Ausgängen (F, $\overline{F}$) legt, an welchem das jeweilige Farbsignal jeweils mit der gleichen Phasenlage liegt, so dass am Ausgang (8) der Schaltstufe (7) jeweils gleichartige Farbsignale für Rot oder Grün in den Zeilen sämtlicher Halbbilder, in welchem diese Farbsignale übertragen werden, eine jeweils gleichbleibende Phasenlage aufweisen.

2. Schaltungsanordnung nach Anspruch 1, dadurch gekennzeichnet, dass die Phasenlage des modulierten Farbsignals (R–Y) bzw. (B–Y) am Eingang der Verzögerungsleitung (τ) mit der Phasenlage des modulierten Farbsignals (B–Y)d bzw. (R–Y)d der vorhergehenden Zeile am Ausgang der Verzögerungsleitung (τ) im SECAM-Dekoder (10) in einer Phasenvergleichsstufe (21) verglichen wird, welche bei Phasenabweichung der beiden Signale ein Steuersignal zur Veränderung der Umschaltphase der Schaltspannung für die Schaltstufe (7) abgibt.

3. Schaltungsanordnung nach Anspruch 2, dadurch gekennzeichnet, dass die Phasenvergleichsstufe (21) während der Burst-Periode aufgetastet wird.

**Claims**

1. Circuit arrangement for decoding of colour TV signals according to the SECAM-system, at which the two colour signals for red and blue are being transmitted line by line alternatingly on an auxiliary carrier each by frequency modulation and the single colour signals are being switched over to avoid interferences of the colour signals caused by the luminance signal following a certain scheme on the transmitting end by their phase positions, at which a logic circuit (14–20) is provided, which resets by the assistance of a switching stage (7) the phase shift keying effected by the SECAM-transmitter, characterized in that the logic circuit generates for the switching stage (7) depending on the interleaved frames switching signals (g, h, Figur 4), which connects the output (8) of the switching stage (7) each time with the very output of an amplifier stage (2) for the colour signal having two antiphase outputs (F, $\overline{F}$), at which the respective colour signal exists each time having the same phase position, so that respective homogeneous colour signals for red or blue do possess a respective constant phase position at the output (8) of the switching stage (7) in the lines of all frames, in which these colour signals are being transmitted.

2. Circuit arrangement according to claim 1, characterized in that the phase position of the modulated colour signals (R–Y) resp. (B–Y) at the input of the delay line (τ) is being compared with the phase position of the modulated colour signal (B–Y) d resp. (R–Y) d of the preceding line at the output of the delay line (τ) in the SECAM-decoder (10) in a phase comparator stage (21), which at phase deviation of the two signals delivers a control signal for the variation of the switching phase of the switching voltage for the switching stage (7).

3. Circuit arrangement according to claim 2, characterized in that the phase comparator stage (21) is being gated during the burst period.

**Revendications**

1. Montage pour décoder des signaux de télévision en couleurs conformes au système SECAM et dans lequel les deux signaux chromatiques pour le rouge et le bleu sont transmis en alternance, d'une ligne à la suivante, dans une porteuse auxiliaire respective, avec une modulation de fréquence et, afin d'éviter des perturbations des signaux chromatiques, les positions de phase des signaux chromatiques individuels sont commutées, côté émission, au moyen du signal de luminance, conformément à un schéma déterminé, et dans lequel il est prévu un circuit logique (14–20) qui, à l'aide d'un étage de commutation (7), annule les commutations de phase réalisées par l'émetteur SECAM, caractérisé en ce que le circuit logique (14–20) pour l'étage de commutation (7) produit, en fonction d'images partielles imbriquées les unes dans les autres, des signaux de commutation (g, h, figure 4), qui provoquent le raccordement de la sortie (8) de l'étage de commutation (7) respectivement à la sortie d'un étage amplificateur (2) prévu pour le signal chromatique et comportant deux sorties à phases opposées (F, $\overline{F}$), à laquelle le signal chromatique respectif possédant respectivement la même position de phase est appliqué, de sorte que sur la sortie (8) de l'étage de commutation (7), des signaux chromatiques respectivement identiques pour le rouge ou le vert dans les lignes de toutes les trames dans lesquelles ces signaux chromatiques sont transmis, possèdent une position de phase respectivement constante.

2. Montage selon la revendication 1, caractérisé en ce que la position de phase du signal chromatique modulé (R–Y) ou (B–Y), présent à l'entrée de

la ligne à retard (τ), est comparée à la position de phase du signal chromatique modulé (B–Y)d ou (R–Y)d de la ligne précédente, présent sur la sortie de la ligne à retard (τ), dans le décodeur SECAM (10), dans un étage comparateur de phase (21) qui, dans le cas d'un écart entre les phases des deux signaux, envoie un signal de commande servant à modifier la phase de commutation de la tension de commutation pour l'étage de commutation (7).

3. Montage selon la revendication 2, caractérisé en ce que l'étage comparateur de phase (21) est exploré pendant la période de la salve de référence.

Fig.1

V a
H e

D
Cl
:2
14

b

:3
15

c 16

Cl
En
ΔT
18

T
17

T3
T2
T4

d

H e

R
:3
19

f

20

9,h

F
1
2
F1
F2
3
4
5
6
7
8

9

10

τ
13 B-Y
11 R-Y

Δφ
21
12 gate
burst

Fig.2

Fig.3

0 085 788

11

Fig. 4